# EUROPEAN PATENT APPLICATION

(11) **EP 4 832 081 A1**
(43) Date of publication of application: **28.10.2026**
(21) Application number: 24908031.8
(22) Date of filing: 17.12.2024
(51) Int. Cl.: H01M 4/36, H01M 4/525, H01M 4/505, H01M 4/131, H01M 10/052, C01G 53/00, C30B 29/22, H01M 4/02

(54) **CATHODE ACTIVE MATERIAL FOR LITHIUM SECONDARY BATTERY, METHOD FOR PREPARING SAME, AND LITHIUM SECONDARY BATTERY COMPRISING SAME**

(30) Priority: 18.12.2023 KR 20230185228; 26.06.2024 KR 20240083825
(71) Applicant: POSCO Holdings Inc., Pohang-si, Gyeongsangbuk-do 37859 (KR)
(72) Inventor: KIM, Juseong, Pohang-si, Gyeongsangbuk-do 37859 (KR); LEE, Changhwan, Pohang-si, Gyeongsangbuk-do 37859 (KR); HONG, Kijoo, Pohang-si, Gyeongsangbuk-do 37859 (KR); LEE, Seonhwa, Pohang-si, Gyeongsangbuk-do 37859 (KR); JUNG, Yongjo, Pohang-si, Gyeongsangbuk-do 37859 (KR); BAE, Changgeun, Pohang-si, Gyeongsangbuk-do 37859 (KR)
(74) Representative: Pfenning, Meinig & Partner mbB
(86) International application number: PCT/KR2024/020539
(87) International publication number: WO 2025/135748

(57) **Abstract**

The present invention relates to a positive electrode active material for a lithium secondary battery, the positive electrode active material including a single-particle-form lithium metal oxide having a nickel (Ni)-containing layered crystal structure and a coating layer disposed on a surface of the lithium metal oxide and containing cobalt (Co) and fluorine (F), wherein, when X-ray Photoelectron Spectroscopy (XPS) analysis for Ols is performed on an outermost surface of the positive electrode active material, a first peak appears in a region in which a binding energy is 530 to 532 eV, and a second peak appears in a region in which a binding energy is 528.5 to 529.5 eV, and a ratio of a height of the first peak to a height of the second peak (first peak/second peak) is 3 to 3.5.

## Description

### [TECHNICAL FIELD]

The present invention relates to a positive electrode active material for a lithium secondary battery, a method for manufacturing the same, and a lithium secondary battery including the same, and more specifically, to a single-particle-based positive electrode active material for a lithium secondary battery, a method for manufacturing the same, and a lithium secondary battery including the same.

### [BACKGROUND ART]

As positive electrode active materials of lithium secondary batteries, lithium cobalt oxide (LiCoO₂), lithium nickel oxide (LiNiO₂), lithium manganese oxide (LiMnO₂ or LiMnO₄, etc.), lithium iron phosphate compounds (LiFePO₄), and the like have been used. Among these, lithium cobalt oxide has advantages of a high operating voltage and excellent capacity characteristics, but cobalt, which is a raw material thereof, is expensive and has unstable supply, making it difficult to commercially apply lithium cobalt oxide to large-capacity batteries. Lithium nickel oxide has poor structural stability, and thus it is difficult to implement sufficient lifespan characteristics. Meanwhile, lithium manganese oxide has excellent stability but has a problem of poor capacity characteristics. Accordingly, lithium composite transition metal oxides including two or more transition metals have been developed to compensate for problems of lithium transition metal oxides including Ni, Co, or Mn alone, and among these, lithium nickel cobalt manganese oxide including Ni, Co, and Mn has been widely used in the field of electric vehicle batteries.

Conventional lithium nickel cobalt manganese oxide was generally in the form of spherical secondary particles in which several tens to several hundreds of primary particles are aggregated. However, in the case of lithium nickel cobalt manganese oxide in the form of secondary particles in which many primary particles are aggregated as described above, there are problems in that particle breakage, in which primary particles are detached, is likely to occur during a rolling process when a positive electrode is manufactured, and cracks occur inside particles during charging and discharging. When particle breakage or cracks occur in a positive electrode active material, a contact area with an electrolyte solution increases, thereby increasing gas generation and active material degradation due to side reactions with the electrolyte solution, and thus there is a problem of deteriorated lifespan characteristics.

In order to solve the above problem, a technology of manufacturing a positive electrode active material in the form of a single particle, rather than secondary particles, by increasing a calcination temperature when manufacturing lithium nickel cobalt manganese oxide has been proposed. In the case of a positive electrode active material in a single-particle form, a contact area with an electrolyte solution is smaller than that of a conventional positive electrode active material in a secondary-particle form, and therefore side reactions with the electrolyte solution are reduced, and particle strength is excellent, so that particle breakage during electrode manufacture is reduced. Accordingly, when a positive electrode active material in a single-particle form is applied, gas generation is reduced and lifespan characteristics are excellent. In addition, recently, demand for high-output and high-capacity batteries such as batteries for electric vehicles has increased, and accordingly, the nickel content in positive electrode active materials has gradually increased, that is, a so-called "high-nickel" trend has emerged.

However, a high-nickel-based single-particle lithium metal oxide has a high content of residual lithium (LiOH and/or Li₂CO₃) remaining on the surface of the lithium metal oxide after calcination, thereby causing a problem of impairing safety of the battery. At this time, when a water-washing process is performed to remove residual lithium, the surface structure of the positive electrode material is damaged, a possibility of proton exchange is increased, electrochemical characteristics of the positive electrode material, such as capacity and output, are impaired, manufacturing costs of the positive electrode material increase, and wastewater is generated, thereby requiring a separate wastewater treatment facility.

### [DETAILED DESCRIPTION OF THE INVENTION]

### [Technical Problem]

Accordingly, one object of the present invention is to provide a positive electrode active material for a lithium secondary battery, in which residual lithium is efficiently reduced while excellent electrochemical characteristics, such as capacity, are maintained, by forming a coating layer on a single-particle-form lithium metal oxide, a method for manufacturing the same, and a lithium secondary battery including the same.

### [Technical Solution]

One embodiment of the present invention provides a positive electrode active material for a lithium secondary battery, the positive electrode active material including a single-particle-form lithium metal oxide having a nickel (Ni)-containing layered crystal structure and a coating layer disposed on a surface of the lithium metal oxide and containing cobalt (Co) and fluorine (F), wherein, when X-ray Photoelectron Spectroscopy (XPS) analysis for O1s is performed on an outermost surface of the positive electrode active material, a first peak appears in a region in which a binding energy is 530 to 532 eV, and a second peak appears in a region in which a binding energy is 528.5 to 529.5 eV, and a ratio of a height of the first peak to a height of the second peak (first peak/second peak) is 3 to 3.5.

A full width at half maximum (FWHM) of the first peak may be 2.5 eV or less.

When X-ray Photoelectron Spectroscopy (XPS) analysis for F1s is performed on the outermost surface of the positive electrode active material, a third peak may appear in a region in which a binding energy is 683 to 686 eV.

A full width at half maximum (FWHM) of the third peak may be 1.65 eV or less.

The coating layer may be in an island form including a plurality of attached particles attached to the surface of the lithium metal oxide and spaced apart from each other.

An average coverage of the coating layer may be 18 to 30 area% based on the entire surface area of the single particle.

An average number of the attached particles may be 240 to 300.

The positive electrode active material may have a residual lithium content of 3500 ppm or less.

The positive electrode active material may have a Li₂CO₃ content, among residual lithium, of 2700 ppm or less.

A content of nickel in the lithium metal oxide may be 80 mol% or more based on a total number of moles of metals excluding lithium.

The lithium metal oxide may be represented by the following Chemical Formula 1.

[Chemical Formula 1] Liₐ[NiₓCo_{y}Mn_{z}M_{w}]O₂

In Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

Another embodiment of the present invention provides a method for manufacturing a positive electrode active material for a lithium secondary battery, including preparing a single-particle-form lithium metal oxide having a nickel (Ni)-containing layered crystal structure; and forming a coating layer containing cobalt (Co) and fluorine (F) by mixing the lithium metal oxide, lithium fluoride (LiF), and a cobalt raw material and then performing coating heat treatment, wherein a water-washing process is not performed after preparing the lithium metal oxide and before forming the coating layer, and an input amount of the lithium fluoride is 0.5 to 1.5 mol% based on a total number of moles of the lithium metal oxide.

An input amount of the cobalt raw material may be 1.5 to 2.5 mol% based on the total number of moles of the lithium metal oxide.

The coating heat treatment may be performed at a temperature of 630 to 720°C.

The coating heat treatment may be performed for 4 to 24 hours.

The coating heat treatment may be performed in an O₂ atmosphere.

Still another embodiment of the present invention provides a positive electrode for a lithium secondary battery, including the above-described positive electrode active material.

Still another embodiment of the present invention provides a lithium secondary battery including the positive electrode for a lithium secondary battery.

### [Advantageous Effects]

In the positive electrode active material for a lithium secondary battery according to one embodiment of the present invention, after calcining a single-particle-form lithium metal oxide, a cobalt- and fluorine-containing coating layer is coated without a separate water-washing process, whereby residual lithium can be reduced and electrochemical characteristics, such as capacity characteristics, can be excellently maintained.

### [BRIEF DESCRIPTION OF THE DRAWINGS]

FIG. 1 is an SEM image of a positive electrode active material manufactured according to Example 1, to which calculation of the number of island-form attached particles and an area ratio is applied through Zero-shot Segmentation.
FIG. 2 is an SEM image of a positive electrode active material manufactured according to Comparative Example 1, to which calculation of the number of island-form attached particles and an area ratio is applied through Zero-shot Segmentation.
FIG. 3 is an SEM image of a positive electrode active material manufactured according to Comparative Example 2, to which calculation of the number of island-form attached particles and an area ratio is applied through Zero-shot Segmentation.
FIG. 4 is an SEM image of a positive electrode active material manufactured according to Comparative Example 3, to which calculation of the number of island-form attached particles and an area ratio is applied through Zero-shot Segmentation.
FIG. 5 is a graph showing results of X-ray Photoelectron Spectroscopy (XPS) analysis for F1s on outermost surfaces of positive electrode active materials manufactured according to Example 1 and Comparative Examples 1 to 3.
FIG. 6 is a graph showing results of X-ray Photoelectron Spectroscopy (XPS) analysis for O1s on outermost surfaces of positive electrode active materials manufactured according to Example 1 and Comparative Examples 1 to 3.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### 1. Positive Electrode Active Material

A positive electrode active material for a lithium secondary battery according to one embodiment of the present invention includes a lithium metal oxide in a single-particle form. A positive electrode active material in a single-particle form has a smaller specific surface area than conventional general secondary particles, thereby reducing an amount of gas generation caused by side reactions with an electrolyte solution, has high particle strength to suppress particle breakage during rolling, and can reduce crack occurrence caused by repeated charging and discharging. Accordingly, compared with secondary particles, the positive electrode active material has excellent lifespan and safety, and has an advantage of implementing high energy density of an electrode.

In the present specification, "single particle" is a term used to distinguish from conventional positive electrode active material particles in the form of secondary particles formed by aggregation of several tens to several hundreds of primary particles, and is a concept including a single particle formed of one primary particle and aggregate particles of 20 or fewer primary particles. In addition, "secondary particle" means an aggregate in which several tens to several hundreds of primary particles are aggregated by physical or chemical bonding between the primary particles even without an intentional aggregation or assembly process for the primary particles, that is, a secondary structure.

In addition, "primary particle" means a minimum particle unit distinguished as one lump when a cross-section of a positive electrode active material is observed through a scanning electron microscope (SEM), and may be composed of one crystal grain or may be composed of a plurality of crystal grains. In addition, "crystal grain" means a distinguishable region in which atoms in a primary particle form a lattice structure in a predetermined direction.

In addition, a content of nickel in the lithium metal oxide according to the present invention may be 80 mol% or more, and more specifically 85 mol% or 90 mol% or more, based on the total number of moles of metals excluding lithium. As the lithium metal oxide contains nickel at a high content as described above, that is, so-called "high nickel," high capacity of a battery can be achieved.

However, a high-nickel-based single-particle lithium metal oxide has a high content of residual lithium (LiOH and/or Li₂CO₃) remaining on the surface of the lithium metal oxide after calcination, thereby causing a problem of impairing safety of the battery. At this time, when a water-washing process is performed to remove residual lithium, the surface structure of the positive electrode material is damaged, a possibility of proton exchange is increased, electrochemical characteristics of the positive electrode material, such as capacity and output, are impaired, manufacturing costs of the positive electrode material increase, and wastewater is generated, thereby requiring a separate wastewater treatment facility.

Accordingly, the present inventors studied a method capable of reducing residual lithium in high-nickel-based single particles while excellently maintaining electrochemical characteristics such as capacity. As a result, the present inventors found that, when a coating layer is formed using a cobalt raw material and lithium fluoride (LiF) as coating raw materials without a separate water-washing process after manufacture of a single-particle-form lithium metal oxide, residual lithium and the coating raw materials undergo a coating reaction, whereby residual lithium can be efficiently reduced and capacity characteristics and the like can be excellently maintained, and completed the present invention.

In particular, the present inventors confirmed that Li₂CO₃ among residual lithium is difficult to remove through a coating reaction because its reaction temperature is relatively high compared with LiOH, but when lithium fluoride is used as a coating raw material, Li₂CO₃ efficiently undergoes a coating reaction, thereby providing a large effect of reducing Li₂CO₃.

Hereinafter, the positive electrode active material for a lithium secondary battery according to one embodiment of the present invention will be described in more detail.

The positive electrode active material for a lithium secondary battery according to one embodiment of the present invention includes a coating layer disposed on a surface of the lithium metal oxide and containing cobalt (Co) and fluorine (F). The coating layer having the above composition may be obtained by using a cobalt raw material and lithium fluoride as coating raw materials.

In addition, in the positive electrode active material for a lithium secondary battery according to one embodiment of the present invention, when X-ray Photoelectron Spectroscopy (XPS) analysis for O1s is performed on an outermost surface, a first peak appears in a region in which a binding energy is 530 to 532 eV. The first peak may mean a peak caused by a bond between oxygen and cobalt.

In addition, in the positive electrode active material for a lithium secondary battery according to one embodiment of the present invention, when X-ray Photoelectron Spectroscopy (XPS) analysis for O1s is performed on the outermost surface, a second peak appears in a region in which a binding energy is 528.5 to 529.5 eV. The second peak may mean a peak caused by a bond between oxygen and fluorine.

At this time, in the positive electrode active material according to the present invention, a ratio of a height of the first peak to a height of the second peak (first peak/second peak) is 3 to 3.5, and more specifically may be 3.1 to 3.4. When the ratio of the height of the first peak to the height of the second peak is too small, this may be a result of too much lithium fluoride being introduced as a coating raw material. In this case, fluorides caused by an excessive amount of lithium fluoride may act as impurity phases, thereby deteriorating electrochemical characteristics of the positive electrode active material, and the effect of reducing residual lithium may also deteriorate. When the ratio of the height of the first peak to the height of the second peak is too large, this may be a result of too little lithium fluoride being introduced as a coating raw material. In this case, the effect of reducing residual lithium according to introduction of lithium fluoride may be insignificant.

In addition, a full width at half maximum (FWHM) of the first peak may be 2.5 eV or less, and more specifically may be 2.3 to 2.5 eV or 2.4 to 2.5 eV. The full width at half maximum of the first peak in the above range can be obtained when lithium fluoride is appropriately introduced as a coating raw material within the range according to the present invention. Accordingly, when the full width at half maximum of the first peak satisfies the above range, an effect of reducing residual lithium and electrochemical characteristics of the positive electrode active material can be preferably implemented.

In addition, in the positive electrode active material according to the present invention, when X-ray Photoelectron Spectroscopy (XPS) analysis for F1s is performed on the outermost surface, a third peak may appear in a region in which a binding energy is 684 to 685 eV. The third peak may be a unique peak appearing when lithium fluoride is used as a coating raw material, and specifically may mean a peak caused by a bond between fluorine and oxygen.

At this time, a full width at half maximum (FWHM) of the third peak may be 1.65 eV or less, and more specifically may be 1.60 eV or less. When the full width at half maximum of the third peak is too large, this may be a result of too much lithium fluoride being introduced as a coating raw material, causing too many fluoride impurity phases. In this case, electrochemical characteristics of the positive electrode active material may deteriorate, and the effect of reducing residual lithium may also deteriorate.

Meanwhile, the coating layer according to the present invention may be in an island form including a plurality of attached particles attached to the surface of the lithium metal oxide and spaced apart from each other.

At this time, an average coverage of the coating layer according to the present invention may be 18 to 30 area%, and more specifically 18.5 to 25 area%, based on the entire surface area of the single particle. Since the average coverage of the coating layer is sufficiently large as in the above range, the effect of reducing residual lithium according to formation of the coating layer can be preferably implemented. However, when the average coverage of the coating layer is too large, capacity characteristics may deteriorate. At this time, the average coverage of the coating layer in the above range can be obtained by using lithium fluoride as a coating raw material in the manufacturing method and appropriately controlling the input amount of lithium fluoride within the range according to the present invention.

In the present specification, "average coverage of the coating layer" may be measured by the following method. First, "coverage of the coating layer for one positive electrode active material particle" may be obtained by calculating, using a Zero-shot segmentation algorithm, a percentage value of a total area of a plurality of attached particles relative to an entire particle surface area visible when observing a particle surface at 20,000× magnification using SEM (scanning electron microscope). At this time, the Zero-shot segmentation algorithm refers to an algorithm that performs segmentation based on extracting pixels of an image, using features of the extracted pixels to predict whether the corresponding pixels belong to a new class, and classifying which object or region each pixel of the image belongs to. Next, "average coverage of the coating layer" may be obtained by obtaining the coverage by the above method for each of 20 arbitrary positive electrode active material particles in positive electrode active material powder and calculating an average value thereof.

In addition, an average number of attached particles in the coating layer according to the present invention may be 240 to 300, and more specifically may be 250 to 280. Since the average number of attached particles in the coating layer is sufficiently large as in the above range, the effect of reducing residual lithium according to formation of the coating layer can be preferably implemented. However, when the average number of attached particles in the coating layer is too large, capacity characteristics may deteriorate. At this time, the average number of attached particles in the coating layer in the above range can be obtained by using lithium fluoride as a coating raw material in the manufacturing method and appropriately controlling the input amount of lithium fluoride within the range according to the present invention.

In the present specification, "average number of attached particles" may be measured by the following method. First, "the number of attached particles for one positive electrode active material particle" may be obtained by calculating, using a Zero-shot segmentation algorithm, the total number of a plurality of attached particles spaced apart from each other visible when observing a particle surface at 20,000× magnification using SEM (scanning electron microscope). At this time, the Zero-shot segmentation algorithm refers to an algorithm that performs segmentation based on extracting pixels of an image, using features of the extracted pixels to predict whether the corresponding pixels belong to a new class, and classifying which object or region each pixel of the image belongs to. Next, "average number of attached particles" may be obtained by obtaining the number of attached particles by the above method for each of 20 arbitrary positive electrode active material particles in positive electrode active material powder and calculating an average value thereof.

In the positive electrode active material according to the present invention, residual lithium remaining on the surface after manufacture of the single-particle-form lithium metal oxide can be efficiently reduced through the above-described coating layer, and thus a residual lithium content may be 3500 ppm or less, and more specifically 3200 ppm or less.

In addition, in the positive electrode active material according to the present invention, by using lithium fluoride as a coating raw material, removal efficiency of Li₂CO₃ in particular among residual lithium is improved, and thus a Li₂CO₃ content among residual lithium may be 2700 ppm or less, and more specifically 2500 ppm or less.

As the residual lithium content decreases, gas generation and a battery swelling phenomenon due to side reactions between residual lithium and an electrolyte solution can be suppressed, thereby remarkably improving safety of the battery.

The lithium metal oxide according to the present invention may more specifically be represented by the following Chemical Formula 1.

[Chemical Formula 1] Liₐ[NiₓCo_{y}Mn_{z}M_{w}]O₂

In Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

In the lithium metal oxide of Chemical Formula 1, lithium may be included in an amount corresponding to a, that is, 0.8≤a≤1.3. When a is too small, capacity may decrease, and when a is too large, strength of the calcined positive electrode active material may increase, thereby making pulverization difficult, and an amount of gas generation may increase due to an increase in lithium by-products. In consideration of an effect of improving capacity characteristics of the positive electrode active material according to control of the lithium content and a sinterability balance during manufacture of the active material, lithium may be more preferably included in an amount of 0.9≤a≤1.1.

In the lithium metal oxide of Chemical Formula 1, nickel may be included in an amount corresponding to x, that is, 0.8≤x<1, and more specifically 0.85≤x<1 or 0.90≤x<1. When the nickel content satisfies the above range, high capacity of a battery can be achieved.

In the lithium metal oxide of Chemical Formula 1, cobalt may be included in an amount corresponding to y, that is, 0≤y≤0.2. When the cobalt content is too small, growth of crystal grain size may be inhibited, and output characteristics may deteriorate. When the cobalt content is too large, manufacturing costs may increase and reversible capacity may decrease.

In the lithium metal oxide of Chemical Formula 1, manganese may be included in an amount corresponding to z, that is, 0≤z≤0.2. When the manganese content is too small, production costs may increase and active material stability may decrease. When the manganese content is too large, capacity and output characteristics of the battery may deteriorate.

In the lithium metal oxide of Chemical Formula 1, M, which is another doping element, may be included in an amount corresponding to w, that is, 0≤w1≤0.2. At this time, M may be Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof. The content of the other doping element may be appropriately selected to implement another doping effect.

### 2. Method for Manufacturing Positive Electrode Active Material

Another embodiment of the present invention provides a method for manufacturing a positive electrode active material for a lithium secondary battery, including preparing a single-particle-form lithium metal oxide having a nickel (Ni)-containing layered crystal structure; and forming a coating layer containing cobalt (Co) and fluorine (F) by mixing the lithium metal oxide, lithium fluoride (LiF), and a cobalt raw material and then performing coating heat treatment, wherein a water-washing process is not performed after preparing the lithium metal oxide and before forming the coating layer, and an input amount of the lithium fluoride is 0.5 to 1.5 mol% based on a total number of moles of the lithium metal oxide.

Hereinafter, the method for manufacturing a positive electrode active material for a lithium secondary battery according to another embodiment of the present invention will be described in detail step by step.

First, a single-particle-form lithium metal oxide having a nickel (Ni)-containing layered crystal structure is prepared.

More specifically, the single-particle-form lithium metal oxide may be prepared by preparing a metal precursor, mixing and calcining the metal precursor and a lithium raw material, and pulverizing the calcined product.

More specifically, the metal precursor may be a metal hydroxide.

The metal precursor may be prepared, for example, by adding a complexing agent-containing solution and a pH adjusting agent-containing solution to a metal-containing solution including a nickel raw material, a manganese raw material, or a cobalt raw material to perform a coprecipitation reaction.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, oxyhydroxide, or the like, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a fatty acid nickel salt, a nickel halide, or a combination thereof, but is not limited thereto.

The cobalt raw material is not particularly limited as long as it is used in the art for manufacturing a positive electrode active material precursor. For example, the cobalt raw material may be a cobalt-containing sulfate, acetate, nitrate, halide, sulfide, hydroxide, oxide, oxyhydroxide, or the like, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, a manganese dicarboxylate, manganese citrate, a manganese salt such as a fatty acid manganese salt, a manganese oxide such as Mn₂O₃, MnO₂, and Mn₃O₄, oxyhydroxide, manganese chloride, or a combination thereof, but is not limited thereto.

The metal-containing solution may be prepared by adding the nickel raw material, the manganese raw material, or the cobalt raw material to a solvent, specifically water, or a mixture of water and an organic solvent uniformly miscible with water (for example, alcohol or the like).

The complexing agent-containing solution serves to form a complex, and may include, as a complexing agent, for example, NH₃, NH₄OH, (NH₄)₂SO₄, NH₄NO₃, NH₄Cl, CH₃COONH₄, NH₄CO₃, or a combination thereof, but is not limited thereto. Meanwhile, the complexing agent-containing solution may be used in the form of an aqueous solution, and in this case, water, or a mixture of water and an organic solvent uniformly miscible with water (for example, alcohol or the like) may be used as a solvent.

The pH adjusting agent-containing solution serves as a precipitant or pH adjuster, and may include an alkali compound such as a hydroxide of an alkali metal or alkaline earth metal, such as NaOH, KOH, or Ca(OH)₂, a hydrate thereof, or a combination thereof. Meanwhile, the pH adjusting agent-containing solution may also be used in the form of an aqueous solution, and in this case, water, or a mixture of water and an organic solvent uniformly miscible with water (for example, alcohol or the like) may be used as a solvent. At this time, the pH adjusting agent-containing solution may be added in an amount such that the pH of the reaction solution becomes 10 to 13.

The coprecipitation reaction may be performed under an inert atmosphere such as nitrogen or argon, at a temperature of 30 to 70°C, and at a pH of 10 to 13.

By the above process, particles of a nickel(-or manganese-cobalt) hydroxide are generated and precipitated in the reaction solution. The precipitated precursor particles may be separated according to a conventional method, washed with water, and dried to obtain a precursor. The precursor may be secondary particles formed by aggregation of primary particles.

At this time, the molar ratio of nickel, cobalt, or manganese in the precursor may be controlled by controlling the concentrations of the nickel raw material, the cobalt raw material, or the manganese raw material. That is, the concentrations of the nickel raw material, the cobalt raw material, and the manganese raw material may be controlled such that the molar ratio of nickel, cobalt, or manganese in the lithium metal oxide, which is the final product, is within the range according to the present invention.

As the lithium raw material, a lithium-containing sulfate, nitrate, acetate, carbonate, oxalate, citrate, halide, hydroxide, or oxyhydroxide may be used, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

In addition, the calcination may be performed at a temperature of 800 to 900°C. When the calcination temperature is too low, the single-particle-form lithium metal oxide may not be formed. When the calcination temperature is too high, crystal structure defects due to over-calcination may occur, and electrochemical characteristics may deteriorate.

In addition, the calcination may be performed for 5 to 24 hours. When the calcination time is too short, the single-particle-form lithium metal oxide may not be formed. When the calcination time is too long, crystal structure defects due to over-calcination may occur, and electrochemical characteristics may deteriorate.

In addition, the atmosphere during calcination is not particularly limited, but, for example, calcination may be performed in an oxygen (O₂) or air atmosphere.

The pulverization may be performed according to a general pulverization process in the art, and for example, may be performed using a jet mill.

Next, after the lithium metal oxide, lithium fluoride (LiF), and the cobalt raw material are mixed, coating heat treatment is performed to form a coating layer containing cobalt (Co) and fluorine (F).

The cobalt raw material is not particularly limited as long as it is a cobalt raw material. For example, the cobalt raw material may be Co(OH)₂, CoCl₂, CoO, CoSO₄·xH₂O, CoSO₄·7H₂O, (CH₃COO)₂Co·4H₂O, Co(NO₃)₂·6H₂O, (CH₃CO₂)₂Co, CoCO₃·xH₂O, Co₃(PO₄)₂, or a combination thereof, but is not necessarily limited thereto.

However, from the viewpoint of more preferably implementing the effect of reducing residual lithium according to formation of the coating layer, the cobalt raw material may more appropriately be Co(OH)₂.

At this time, the input amount of the lithium fluoride is 0.5 to 1.5 mol%, and more specifically may be 0.7 to 1.3 mol%, based on the total number of moles of the lithium metal oxide. When the input amount of lithium fluoride is too small, the effect of removing residual lithium may be reduced. When the input amount of lithium fluoride is too large, fluoride impurity phases in the coating layer due to excessive lithium fluoride may increase, electrochemical characteristics such as capacity of the positive electrode active material may deteriorate, and the effect of removing residual lithium may rather be degraded. In addition, when the input amount of lithium fluoride satisfies the above range, various physical properties related to XPS analysis of the positive electrode active material can be more appropriately implemented within the ranges according to the present invention.

In addition, the input amount of the cobalt raw material may be 1.5 to 2.5 mol%, and more specifically 1.7 to 2.3 mol%, based on the total number of moles of the lithium metal oxide. When the input amount of the cobalt raw material is too small, effects of improving capacity and lifespan and reducing residual lithium of the positive electrode active material according to cobalt coating may be insignificant. When the input amount of the cobalt raw material is too large, excessive cobalt may act as an impurity phase, and capacity of the positive electrode active material may rather decrease. In addition, when the input amount of the cobalt raw material satisfies the above range, various physical properties related to XPS analysis of the positive electrode active material, average coverage, and average number of attached particles can be more appropriately implemented within the ranges according to the present invention.

In addition, the coating heat treatment may be performed at a temperature of 630 to 720°C, and more specifically 660 to 720°C or 670 to 720°C. When the coating heat treatment temperature is too low, the coating reaction may not be smoothly performed, a coating yield may decrease, and accordingly, the effect of reducing residual lithium and the effect of maintaining electrochemical characteristics may deteriorate. When the coating heat treatment temperature is too high, the crystal structure of the lithium metal oxide may be adversely affected, and electrochemical characteristics of the positive electrode active material may rather deteriorate. In addition, when the coating heat treatment temperature satisfies the above range, various physical properties related to XPS analysis of the positive electrode active material can be more appropriately implemented within the ranges according to the present invention.

The coating heat treatment may be performed for 4 to 24 hours, and more specifically may be performed for 4 to 15 hours or 7 to 13 hours. When the coating heat treatment time is too short, the coating reaction may not be smoothly performed, a coating yield may decrease, and accordingly, the effect of reducing residual lithium and the effect of maintaining electrochemical characteristics may deteriorate. When the coating heat treatment time is too long, the crystal structure of the lithium metal oxide may be adversely affected, and electrochemical characteristics of the positive electrode active material may rather deteriorate. In addition, when the coating heat treatment time satisfies the above range, various physical properties related to XPS analysis of the positive electrode active material can be more appropriately implemented within the ranges according to the present invention.

The coating heat treatment may be performed in an O₂ atmosphere. Accordingly, the coating reaction may be more smoothly performed, coating efficiency may be increased, and consequently, the effect of reducing residual lithium and the effect of maintaining electrochemical characteristics may be improved. In addition, when the coating heat treatment atmosphere satisfies the above condition, various physical properties related to XPS analysis of the positive electrode active material can be more appropriately implemented within the ranges according to the present invention.

### 3. Positive Electrode and Lithium Secondary Battery

Still another embodiment of the present invention provides a positive electrode for a lithium secondary battery, including the above-described positive electrode active material.

More specifically, the positive electrode may include a positive electrode current collector and a positive electrode active material layer disposed on the positive electrode current collector and including the above-described positive electrode active material.

The positive electrode current collector is not particularly limited as long as it has conductivity without causing a chemical change in the battery, and examples thereof may include stainless steel, aluminum, nickel, titanium, calcined carbon, or aluminum or stainless steel surface-treated with carbon, nickel, titanium, silver, or the like. In addition, the positive electrode current collector may generally have a thickness of 3 to 500 µm, and fine irregularities may be formed on a surface of the positive electrode current collector to increase adhesion of the positive electrode active material. For example, the positive electrode current collector may be used in various forms such as a film, a sheet, a foil, a net, a porous body, a foam, and a nonwoven fabric.

The positive electrode active material layer may include a binder and/or a conductive material together with the above-described positive electrode active material.

At this time, the binder serves to improve adhesion between positive electrode active material particles and adhesion between the positive electrode active material and the positive electrode current collector. Specific examples thereof may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and one thereof alone or a mixture of two or more thereof may be used, but the binder is not limited thereto. The binder may be included in an amount of 1 to 30 wt% based on the total weight of the positive electrode active material layer.

In addition, the conductive material is used to impart conductivity to the electrode, and may be used without particular limitation as long as it has electron conductivity and does not cause a chemical change in the battery to be configured. Specific examples thereof may include graphite such as natural graphite or artificial graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used, but the conductive material is not limited thereto. The conductive material may generally be included in an amount of 1 to 30 wt% based on the total weight of the positive electrode active material layer.

The positive electrode may be manufactured according to a conventional method for manufacturing a positive electrode, except that the above-described positive electrode active material is used.

Specifically, the positive electrode may be manufactured by applying, onto a positive electrode current collector, a composition for forming a positive electrode active material layer including the above-described positive electrode active material and, as necessary, optionally including a binder, a conductive material, or a solvent, and then drying and rolling the same. At this time, the types and contents of the positive electrode active material, the binder, and the conductive material are as described above.

The solvent may be a solvent generally used in the art, and examples thereof may include dimethyl sulfoxide (DMSO), isopropyl alcohol, N-methylpyrrolidone (NMP), acetone, or water, and one thereof alone or a mixture of two or more thereof may be used. The amount of the solvent used is sufficient as long as it can dissolve or disperse the positive electrode active material, the conductive material, and the binder in consideration of a coating thickness and manufacturing yield of the slurry, and can provide a viscosity capable of exhibiting excellent thickness uniformity during subsequent coating for manufacturing the positive electrode.

Alternatively, the positive electrode may be manufactured by casting the composition for forming the positive electrode active material layer on a separate support, and then laminating a film obtained by peeling the composition from the support onto a positive electrode current collector.

Still another embodiment of the present invention provides a lithium secondary battery including the above-described positive electrode for a lithium secondary battery.

More specifically, the lithium secondary battery may include a positive electrode, a negative electrode, a separator, and an electrolyte.

The lithium secondary battery may optionally further include a battery case accommodating an electrode assembly of the positive electrode, the negative electrode, and the separator, and a sealing member sealing the battery case.

The negative electrode may include a negative electrode current collector and a negative electrode active material layer positioned on the negative electrode current collector.

The negative electrode current collector is not particularly limited as long as it has high conductivity without causing a chemical change in the battery, and examples thereof may include copper, stainless steel, aluminum, nickel, titanium, calcined carbon, copper or stainless steel surface-treated with carbon, nickel, titanium, silver, or the like, an aluminum-cadmium alloy, and the like. In addition, the negative electrode current collector may generally have a thickness of 3 to 500 µm, and like the positive electrode current collector, fine irregularities may be formed on a surface of the current collector to enhance bonding force of the negative electrode active material. For example, the negative electrode current collector may be used in various forms such as a film, a sheet, a foil, a net, a porous body, a foam, and a nonwoven fabric.

The negative electrode active material layer may optionally include a binder and a conductive material together with a negative electrode active material. As an example, the negative electrode active material layer may be manufactured by applying and drying, on a negative electrode current collector, a composition for forming a negative electrode active material layer including a negative electrode active material and optionally including a binder and a conductive material, or may be manufactured by casting the composition for forming the negative electrode on a separate support and then laminating a film obtained by peeling the composition from the support onto the negative electrode current collector.

As the negative electrode active material, a compound capable of reversible intercalation and deintercalation of lithium may be used. Specific examples thereof may include carbonaceous materials such as artificial graphite, natural graphite, graphitized carbon fibers, and amorphous carbon; metallic compounds capable of alloying with lithium, such as Si, Al, Sn, Pb, Zn, Bi, In, Mg, Ga, Cd, a Si alloy, a Sn alloy, or an Al alloy; metal oxides capable of doping and dedoping lithium, such as SiOβ (0<β<2), SnO₂, vanadium oxide, and lithium vanadium oxide; or composites including the metallic compound and a carbonaceous material, such as a Si-C composite or a Sn-C composite, and one thereof or a mixture of two or more thereof may be used. In addition, a metal lithium thin film may be used as the negative electrode active material. Further, as the carbon material, both low-crystalline carbon and high-crystalline carbon may be used. Representative examples of the low-crystalline carbon include soft carbon and hard carbon, and representative examples of the high-crystalline carbon include amorphous, plate-like, flake-like, spherical, or fibrous natural graphite or artificial graphite, Kish graphite, pyrolytic carbon, mesophase pitch-based carbon fibers, meso-carbon microbeads, mesophase pitches, and high-temperature calcined carbon such as petroleum or coal tar pitch-derived cokes.

The binder and the conductive material may be the same as those described above for the positive electrode.

The separator separates the negative electrode and the positive electrode and provides a movement path for lithium ions, and may be used without particular limitation as long as it is commonly used as a separator in lithium secondary batteries. In particular, a separator having low resistance to ion movement of the electrolyte and excellent electrolyte solution impregnation ability is preferable. Specifically, a porous polymer film, for example, a porous polymer film made of a polyolefin-based polymer such as an ethylene homopolymer, a propylene homopolymer, an ethylene/butene copolymer, an ethylene/hexene copolymer, or an ethylene/methacrylate copolymer, or a laminated structure having two or more layers thereof may be used. In addition, a conventional porous nonwoven fabric, for example, a nonwoven fabric made of high-melting-point glass fibers, polyethylene terephthalate fibers, or the like, may also be used. In addition, a coated separator including a ceramic component or a polymer material may be used to secure heat resistance or mechanical strength, and may optionally be used in a single-layer or multilayer structure.

The electrolyte may include an organic liquid electrolyte, an inorganic liquid electrolyte, a solid polymer electrolyte, a gel-type polymer electrolyte, a solid inorganic electrolyte, a molten inorganic electrolyte, and the like, which can be used when manufacturing a lithium secondary battery, but the electrolyte is not limited thereto.

Specifically, the organic liquid electrolyte may include an organic solvent and a lithium salt.

As the organic solvent, any solvent may be used without particular limitation as long as it can serve as a medium through which ions involved in an electrochemical reaction of the battery can move. Specifically, examples of the organic solvent may include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles represented by R-CN, wherein R is a C2 to C20 linear, branched, or cyclic hydrocarbon group and may include a double-bond aromatic ring or an ether bond; amides such as dimethylformamide; dioxolanes such as 1,3-dioxolane; or sulfolanes. Among these, carbonate-based solvents are preferable, and a mixture of a cyclic carbonate having high ionic conductivity and high dielectric constant, which can improve charge/discharge performance of a battery, such as ethylene carbonate or propylene carbonate, and a low-viscosity linear carbonate-based compound, such as ethyl methyl carbonate, dimethyl carbonate, or diethyl carbonate, is more preferable. In this case, when the cyclic carbonate and the chain carbonate are mixed and used at a volume ratio of about 1:1 to about 1:9, excellent electrolyte solution performance may be exhibited.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 to 2.0 M. When the concentration of the lithium salt is within the above range, the electrolyte has appropriate conductivity and viscosity, and thus excellent electrolyte performance can be exhibited and lithium ions can effectively move.

In addition to the above electrolyte components, the electrolyte may further include one or more additives for the purpose of improving lifespan characteristics of the battery, suppressing reduction in battery capacity, improving discharge capacity of the battery, and the like, such as a haloalkylene carbonate-based compound such as difluoroethylene carbonate, pyridine, triethyl phosphite, triethanolamine, cyclic ether, ethylene diamine, n-glyme, hexamethylphosphoric triamide, a nitrobenzene derivative, sulfur, a quinone imine dye, an N-substituted oxazolidinone, an N,N-substituted imidazolidine, ethylene glycol dialkyl ether, an ammonium salt, pyrrole, 2-methoxy ethanol, or aluminum trichloride. At this time, the additive may be included in an amount of 0.1 to 5 wt% based on the total weight of the electrolyte.

As described above, since the lithium secondary battery including the positive electrode active material according to the present invention stably exhibits excellent discharge capacity, output characteristics, and capacity retention rate, the lithium secondary battery is useful for portable devices such as mobile phones, notebook computers, and digital cameras, and in the field of electric vehicles such as hybrid electric vehicles (HEVs).

Accordingly, still another embodiment of the present invention provides a battery module including the lithium secondary battery as a unit cell, and a battery pack including the same.

The battery module or battery pack may be used as a power source for one or more medium- to large-sized devices selected from power tools; electric vehicles including electric vehicles (EVs), hybrid electric vehicles, and plug-in hybrid electric vehicles (PHEVs); or power storage systems.

Hereinafter, embodiments of the present invention will be described in more detail through Examples. However, the following Examples are only preferred embodiments of the present invention, and the present invention is not limited by the following Examples.

### Example 1

### (1) Manufacture of Positive Electrode Active Material

(Preparation of Lithium Metal Oxide) A precursor having a composition of (Ni₀.₉₆Co₀.₀₃Mn₀.₀₁)(OH)₂ and LiOH·H₂O were introduced into a mixer and mechanically mixed, and then calcined at a temperature of 850°C for 10 hours under an oxygen (O₂) atmosphere to form a lithium metal oxide. Thereafter, the formed positive electrode active material was pulverized through a jet-mill process to form a single-particle-form lithium metal oxide.

(Coating) Thereafter, the lithium metal oxide, lithium fluoride (LiF) in an amount of 1 mol% based on the total number of moles of the lithium metal oxide, and cobalt hydroxide (Co(OH)₂) in an amount of 2 mol% based on the total number of moles of the lithium metal oxide were mixed, and then coating heat treatment was performed at a temperature of 700°C for 10 hours under an O₂ atmosphere to form a cobalt- and fluorine-containing coating layer on the surface of the lithium metal oxide.

### (2) Manufacture of Lithium Secondary Battery

A slurry for manufacturing an electrode plate was prepared by mixing the manufactured positive electrode active material, a conductive material (carbon black, Denka black), and a binder (PVDF, KF1100) at 96.5:1.5:2 wt%, and adding NMP (N-methyl-2-pyrrolidone) to adjust viscosity such that a solid content was about 30%. The prepared slurry was coated on a 20 µm-thick Al foil using a doctor blade, and then dried and rolled. The electrode loading amount was 15.4 mg/cm², and the rolling density (25°C, 20 kN) was 3.6 g/cm³.

As the electrolyte solution, an electrolyte solution obtained by adding 3.0 vol% VC based on the total amount of the electrolyte solution to 1 M LiPF₆ in EC:DMC:EMC=3:4:3 (vol%) was used, and a coin cell was manufactured using a PP separator and a lithium negative electrode (200 µm, Honzo metal).

### Comparative Example 1

A positive electrode active material and a lithium secondary battery were manufactured in the same manner as in Example 1, except that, in the coating step, lithium hydroxide (LiOH·H₂O) in an amount of 1 mol% based on the total number of moles of the lithium metal oxide was used instead of lithium fluoride.

### Comparative Example 2

A positive electrode active material and a lithium secondary battery were manufactured in the same manner as in Example 1, except that, in the coating step, lithium fluoride (LiF) in an amount of 2 mol% based on the total number of moles of the lithium metal oxide was used.

### Comparative Example 3

A positive electrode active material and a lithium secondary battery were manufactured in the same manner as in Example 1, except that lithium fluoride (LiF) was not used as a coating raw material in the coating step.

Table 1 below summarizes process conditions of the Example and Comparative Examples.

**[Table 1]**

| | Coating Raw Material and Input Amount (mol%) | | | Coating Heat Treatment | | |
|---|---|---|---|---|---|---|
| | LiF | LiOH·H₂O | Co(OH)₂ | Temperature (°C) | Time (h) | Atmosphere |
| Example 1 | 1 | 0 | 2 | 700 | 10 | O₂ |
| Comparative Example 1 | 0 | 1 | 2 | 700 | 10 | O₂ |
| Comparative Example 2 | 2 | 0 | 2 | 700 | 10 | O₂ |
| Comparative Example 3 | 0 | 0 | 2 | 700 | 10 | O₂ |

Tables 2 to 4 below summarize evaluation results of physical properties of positive electrode active materials and electrochemical characteristics of lithium secondary batteries according to Experimental Examples 2 and 3 described below.

**[Table 2]**

| | O1s XPS Analysis | | | | F1s XPS Analysis | |
|---|---|---|---|---|---|---|
| | First Peak Expression Position (eV) | Second Peak Expression Position (eV) | First Peak/Second Peak Height Ratio | First Peak FWHM (eV) | Third Peak Expression Position | Third Peak FWHM (eV) |
| Example 1 | 531.1 | 528.9 | 3.31 | 2.45 | 684.7 | 1.55 |
| Comparative Example 1 | 531.1 | 528.8 | 3.71 | 2.18 | - | - |
| Comparative Example 2 | 531.1 | 529.1 | 1.35 | 2.01 | 684.7 | 1.73 |
| Comparative Example 3 | 531.1 | 528.6 | 3.62 | 2.23 | - | - |

**[Table 3]**

| | Average Number of Attached Particles | Average Coverage (area%) |
|---|---|---|
| Example 1 | 263.64 | 19.62 |
| Comparative Example 1 | 21.32 | 2.64 |
| Comparative Example 2 | 222.6 | 17.25 |
| Comparative Example 3 | 29.04 | 3.93 |

**[Table 4]**

| | Residual Lithium Content (ppm) | | |
|---|---|---|---|
| | LiOH | Li₂CO₃ | Total |
| Example 1 | 677 | 2430 | 3107 |
| Comparative Example 1 | 459 | 4038 | 4527 |
| Comparative Example 2 | 540 | 2799 | 3639 |
| Comparative Example 3 | 1037 | 2868 | 3905 |

**[Table 5]**

| | Electrochemical Characteristics | | |
|---|---|---|---|
| | Initial Charge Capacity (mAh/g) | Initial Discharge Capacity (mAh/g) | Initial Efficiency (mAh/g) |
| Example 1 | 239.9 | 207 | 86.3 |
| Comparative Example 1 | 241.6 | 209.5 | 86.7 |
| Comparative Example 2 | 240.2 | 206.8 | 86.1 |
| Comparative Example 3 | 242.2 | 209.1 | 86.3 |

### Experimental Example 1: Evaluation of SEM Images of Positive Electrode Active Material

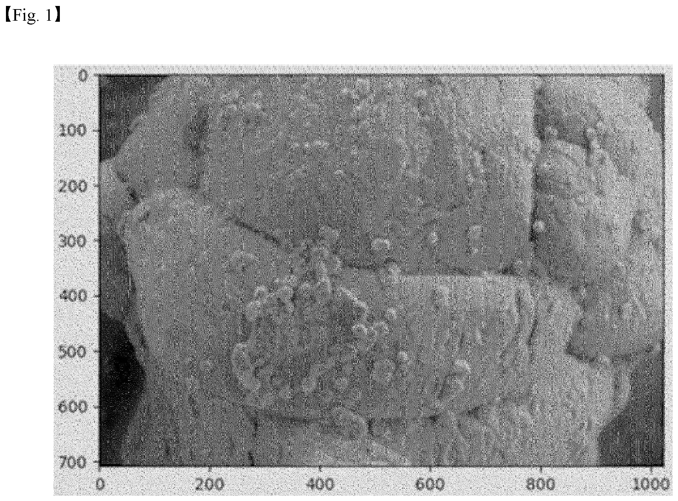

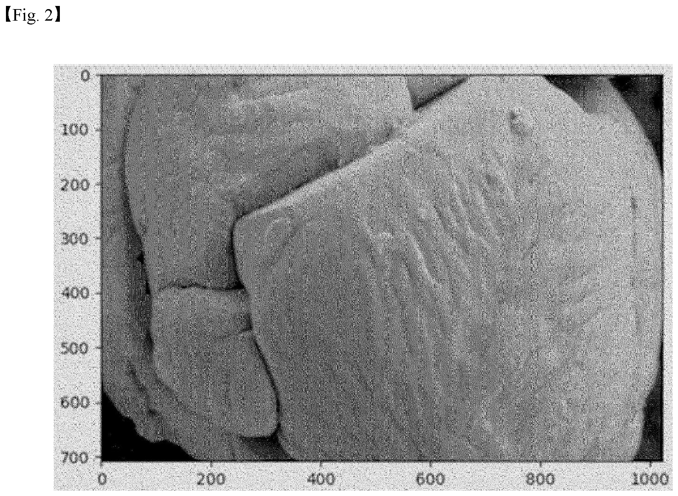

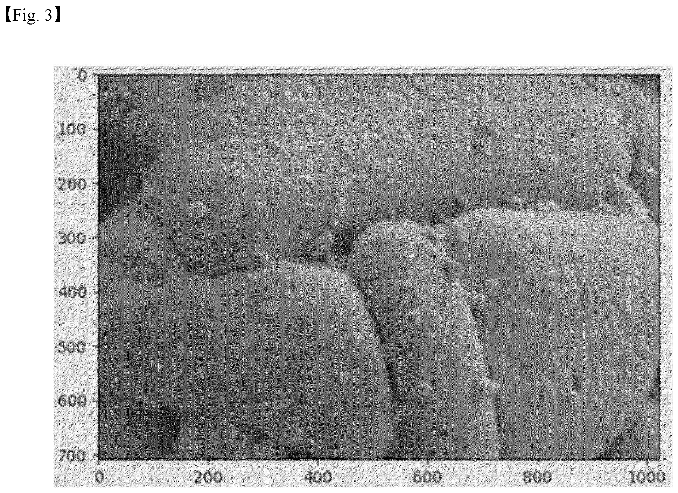

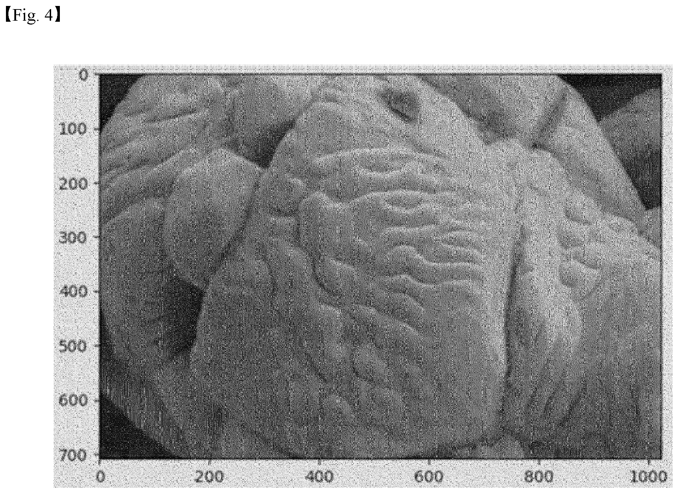

SEM (scanning electron microscope) images of the positive electrode active materials manufactured according to Example 1 and Comparative Examples 1 to 3, to which calculation of the number of island-form attached particles and an area ratio was applied through Zero-shot Segmentation, were observed and are shown in FIGS. 1 to 4, respectively.

Referring to FIGS. 1 to 4, it was confirmed that the positive electrode active materials of the Example and Comparative Examples had a single-particle form. In addition, it was confirmed that a plurality of attached particles were attached to the surface of the single particle in an amorphous dot form while being spaced apart from each other (that is, an island-type coating layer).

### Experimental Example 2: Evaluation of Physical Properties of Positive Electrode Active Material

### (1) Evaluation of Peaks During X-ray Photoelectron Spectroscopy (XPS) Analysis for O1s

Binding energy peaks (first peak and second peak) were analyzed when XPS analysis for O1s was performed on the outermost surface of the manufactured positive electrode active material. Through this, expression positions of the first peak and the second peak, a height ratio of the first peak to the second peak, and a full width at half maximum of the first peak were calculated.

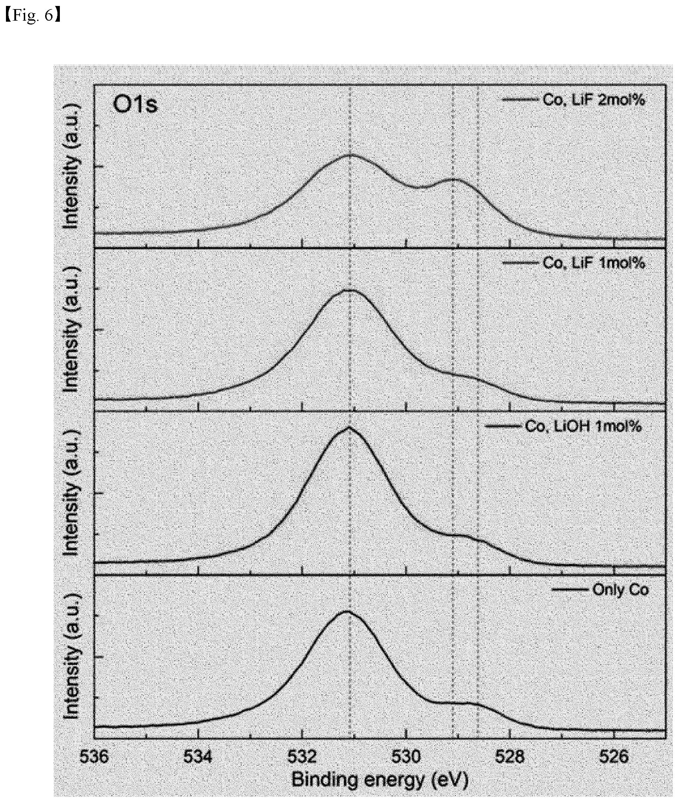

FIG. 6 is a graph showing results of X-ray Photoelectron Spectroscopy (XPS) analysis for O1s on outermost surfaces of positive electrode active materials manufactured according to Example 1 and Comparative Examples 1 to 3.

### (2) Evaluation of Peak During X-ray Photoelectron Spectroscopy (XPS) Analysis for F1s

A binding energy peak (third peak) was analyzed when XPS analysis for F1s was performed on the outermost surface of the manufactured positive electrode active material. Through this, an expression position and full width at half maximum of the third peak were calculated.

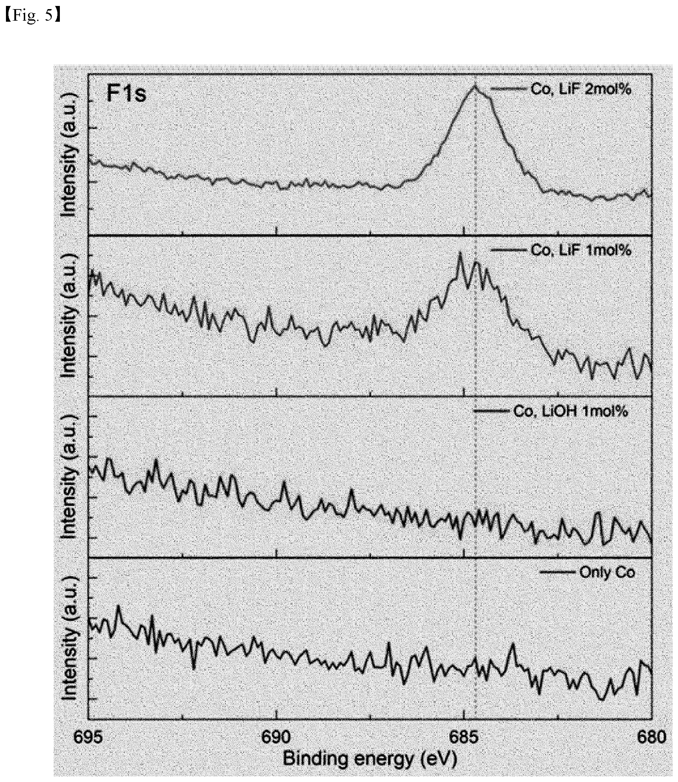

FIG. 5 is a graph showing results of X-ray Photoelectron Spectroscopy (XPS) analysis for F1s on outermost surfaces of positive electrode active materials manufactured according to Example 1 and Comparative Examples 1 to 3.

### (3) Evaluation of Residual Lithium

After distilled water was added to the positive electrode active material, residual lithium was extracted using a stirrer, and the positive electrode active material powder and the extract were separated using a filtering apparatus. Thereafter, the extract was measured through neutralization titration using a Metrohm potentiometric titrator to evaluate residual lithium.

### (4) Evaluation of Average Coverage of Coating Layer

"Average coverage of the coating layer" was measured by the following method. First, "coverage of the coating layer for one positive electrode active material particle" was obtained by calculating, using a Zero-shot segmentation algorithm, a percentage value of a total area of a plurality of attached particles relative to an entire particle surface area visible when observing a particle surface at 20,000× magnification using SEM (scanning electron microscope). At this time, the Zero-shot segmentation algorithm refers to an algorithm that performs segmentation based on extracting pixels of an image, using features of the extracted pixels to predict whether the corresponding pixels belong to a new class, and classifying which object or region each pixel of the image belongs to. Next, "average coverage of the coating layer" was obtained by obtaining the coverage by the above method for each of 20 arbitrary positive electrode active material particles in positive electrode active material powder and calculating an average value thereof.

### (5) Evaluation of Average Number of Attached Particles

"Average number of attached particles" was measured by the following method. First, "the number of attached particles for one positive electrode active material particle" was obtained by calculating, using a Zero-shot segmentation algorithm, the total number of a plurality of attached particles spaced apart from each other visible when observing a particle surface at 20,000× magnification using SEM (scanning electron microscope). At this time, the Zero-shot segmentation algorithm refers to an algorithm that performs segmentation based on extracting pixels of an image, using features of the extracted pixels to predict whether the corresponding pixels belong to a new class, and classifying which object or region each pixel of the image belongs to. Next, "average number of attached particles" was obtained by obtaining the number of attached particles by the above method for each of 20 arbitrary positive electrode active material particles in positive electrode active material powder and calculating an average value thereof.

### Experimental Example 3: Evaluation of Electrochemical Characteristics of Lithium Secondary Battery

### (1) Evaluation of Initial Capacity and Initial Efficiency

After lithium secondary battery half cells were manufactured and aged at 25°C for 12 hours, a charge/discharge test was performed at 25°C. For initial capacity evaluation, 200 mAh/g was used as a reference capacity, and charging was performed to 4.25 V at a constant current of 0.1 C, followed by switching to constant voltage, and charging was continued until the end current reached 0.05 C. After charging, a rest time of 10 minutes was provided, and discharge was performed to 2.5 V at a constant current of 0.1 C based on a reference capacity of 200 mAh/g.

Referring to Tables 1 to 5, in the case of Example 1, in which lithium fluoride and cobalt hydroxide were used as coating raw materials and various coating process conditions such as the input amount of lithium fluoride were appropriately controlled, it was confirmed that various physical properties, including the ratio of the height of the first peak to the height of the second peak in XPS analysis, were appropriately implemented within the ranges according to the present invention. In addition, it was confirmed that the average coverage of the coating layer and the average number of attached particles in the coating layer were appropriately implemented within the ranges according to the present invention. In addition, it was confirmed that the effect of reducing residual lithium was very excellent, and in particular, Li₂CO₃ was efficiently reduced. In addition, it was confirmed that capacity characteristics (initial discharge capacity) of the battery also exhibited a favorable level.

In contrast, in the case of Comparative Example 1, as a result of using lithium hydroxide instead of lithium fluoride, it was confirmed that physical properties such as the ratio of the height of the first peak to the height of the second peak in XPS analysis were outside the ranges according to the present invention. In addition, as a result of not using lithium fluoride as a coating raw material, it was confirmed that the third peak, which is a unique peak resulting from the use of lithium fluoride, was not expressed. In addition, it was confirmed that the average coverage of the coating layer and the average number of attached particles in the coating layer were much smaller than those of the Example. In addition, it was confirmed that the total residual lithium reduction effect was deteriorated compared with the Example, and in particular, the Li₂CO₃ residual lithium reduction effect was remarkably inferior compared with the Example.

In the case of Comparative Example 2, as a result of the input amount of lithium fluoride being too large, it was confirmed that physical properties such as the ratio of the height of the first peak to the height of the second peak in XPS analysis were outside the ranges according to the present invention. In addition, it was confirmed that although the third peak, which is a unique peak resulting from the use of lithium fluoride as a coating raw material, was expressed, the full width at half maximum of the third peak was obtained to be too large. In addition, it was confirmed that the average coverage of the coating layer and the average number of attached particles in the coating layer were somewhat smaller than those of the Example. In addition, it was confirmed that the total residual lithium reduction effect and the Li₂CO₃ residual lithium reduction effect were deteriorated compared with the Example. In addition, it was confirmed that capacity characteristics of the battery deteriorated compared with the Example.

In the case of Comparative Example 3, as a result of using only cobalt hydroxide as a coating raw material, it was confirmed that physical properties such as the ratio of the height of the first peak to the height of the second peak in XPS analysis were outside the ranges according to the present invention. In addition, as a result of not using lithium fluoride as a coating raw material, it was confirmed that the third peak, which is a unique peak resulting from the use of lithium fluoride, was not expressed. In addition, it was confirmed that the average coverage of the coating layer and the average number of attached particles in the coating layer were much smaller than those of the Example. In addition, it was confirmed that the total residual lithium reduction effect and the Li₂CO₃ residual lithium reduction effect were deteriorated compared with the Example.

Although preferred embodiments of the present invention have been described above, the present invention is not limited thereto, and various modifications may be made and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A positive electrode active material for a lithium secondary battery, comprising:
a single-particle-form lithium metal oxide having a nickel (Ni)-containing layered crystal structure; and
a coating layer disposed on a surface of the lithium metal oxide and containing cobalt (Co) and fluorine (F),
wherein, when X-ray Photoelectron Spectroscopy (XPS) analysis for O1s is performed on an outermost surface of the positive electrode active material, a first peak appears in a region in which a binding energy is 530 to 532 eV, and a second peak appears in a region in which a binding energy is 528.5 to 529.5 eV, and
wherein a ratio of a height of the first peak to a height of the second peak (first peak/second peak) is 3 to 3.5.

2. The positive electrode active material for a lithium secondary battery of claim 1,
wherein a full width at half maximum (FWHM) of the first peak is 2.5 eV or less.

3. The positive electrode active material for a lithium secondary battery of claim 1,
wherein, when X-ray Photoelectron Spectroscopy (XPS) analysis for F1s is performed on the outermost surface of the positive electrode active material, a third peak appears in a region in which a binding energy is 683 to 686 eV.

4. The positive electrode active material for a lithium secondary battery of claim 3,
wherein a full width at half maximum (FWHM) of the third peak is 1.65 eV or less.

5. The positive electrode active material for a lithium secondary battery of claim 1,
wherein the coating layer is in an island form including a plurality of attached particles attached to the surface of the lithium metal oxide and spaced apart from each other.

6. The positive electrode active material for a lithium secondary battery of claim 5,
wherein an average coverage of the coating layer is 18 to 30 area% based on an entire surface area of the single particle.

7. The positive electrode active material for a lithium secondary battery of claim 5,
wherein an average number of the attached particles is 240 to 300.

8. The positive electrode active material for a lithium secondary battery of claim 1,
wherein a residual lithium content is 3500 ppm or less.

9. The positive electrode active material for a lithium secondary battery of claim 1,
wherein a Li₂CO₃ content among residual lithium is 2700 ppm or less.

10. The positive electrode active material for a lithium secondary battery of claim 1,
wherein a content of nickel in the lithium metal oxide is 80 mol% or more based on a total number of moles of metals excluding lithium.

11. The positive electrode active material for a lithium secondary battery of claim 1,
wherein the lithium metal oxide is represented by the following Chemical Formula 1:
[Chemical Formula 1] Liₐ[NiₓCo_{y}Mn_{z}M_{w}]O₂
wherein, in Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

12. A method for manufacturing a positive electrode active material for a lithium secondary battery, comprising:
preparing a single-particle-form lithium metal oxide having a nickel (Ni)-containing layered crystal structure; and
forming a coating layer containing cobalt (Co) and fluorine (F) by mixing the lithium metal oxide, lithium fluoride (LiF), and a cobalt raw material and then performing coating heat treatment,
wherein a water-washing process is not performed after preparing the lithium metal oxide and before forming the coating layer, and
wherein an input amount of the lithium fluoride is 0.5 to 1.5 mol% based on a total number of moles of the lithium metal oxide.

13. The method for manufacturing a positive electrode active material for a lithium secondary battery of claim 12,
wherein an input amount of the cobalt raw material is 1.5 to 2.5 mol% based on the total number of moles of the lithium metal oxide.

14. The method for manufacturing a positive electrode active material for a lithium secondary battery of claim 12,
wherein the coating heat treatment is performed at a temperature of 630 to 720°C.

15. The method for manufacturing a positive electrode active material for a lithium secondary battery of claim 12,
wherein the coating heat treatment is performed for 4 to 24 hours.

16. The method for manufacturing a positive electrode active material for a lithium secondary battery of claim 12,
wherein the coating heat treatment is performed in an O₂ atmosphere.

17. A positive electrode for a lithium secondary battery, comprising the positive electrode active material of claim 1.

18. A lithium secondary battery comprising the positive electrode for a lithium secondary battery of claim 17.
